# EUROPEAN PATENT APPLICATION

(11) **EP 4 492 910 A1**
(43) Date of publication of application: **15.01.2025**
(21) Application number: 24188264.6
(22) Date of filing: 12.07.2024
(51) Int. Cl.: H04W 76/19, H04W 40/22, H04W 52/02, H04W 88/04

(54) **CONDITIONAL DEVICE-TO-DEVICE COMMUNICATIONS FOR AMBIENT INTERNET OF THINGS DEVICES**

(30) Priority: 12.07.2023 US 202363526256 P
(71) Applicant: Nokia Technologies Oy, 02610 Espoo (FI)
(72) Inventor: TAYYAB, Muhammad, 90630 OULU (FI); MANGALVEDHE, Nitin, ILLINOIS, 60010 (US); RATASUK, Rapeepat, ILLINOIS, 60010 (US); LEE, SunYoung, 06583 SEOUL (KR); ASAD ULLAH, Muhammad, 90570 OULU (FI)
(74) Representative: Script Intellectual Property LLP

(57) **Abstract**

Conditional device-to-device communications for ambient Internet of Things devices is provided. A method for conditional device-to-device communications for ambient Internet of Things devices may include transmitting a first signal to a relay device indicating that a condition has been satisfied, and determining whether a radio link failure with a network entity exists based on whether a second signal is received a specified number of times from the relay device.

## Description

### TECHNICAL FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to conditional device-to-device communications for ambient Internet of Things (IoT) devices.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Various exemplary embodiments may provide an apparatus including at least one processor and at least one memory storing instructions that, when executed by the at least one processor, cause the apparatus at least to transmit a first signal to a relay device indicating that a condition has been satisfied and determine whether a radio link failure with a network entity exists based on whether a second signal is received a specified number of times from the relay device.

Some exemplary embodiments may provide an apparatus including at least one processor and at least one memory storing instructions that, when executed by the at least one processor, cause the apparatus at least to receive a first signal from a user equipment indicating that a condition has been satisfied and transmit operating state information of the user equipment to a network entity. The apparatus may also be caused to transmit one or more second signals to the user equipment relaying a reference signal or a data transmission from the network entity to the user equipment.

Various exemplary embodiments may provide an apparatus including at least one processor and at least one memory storing instructions that, when executed by the at least one processor, cause the apparatus at least to transmit configuration information of a relay device to a user equipment and receive operating state information of the user equipment from the relay device. The apparatus may also be caused to transmit a reference signal or data transmission to the relay device to be relayed to the user equipment by the relay device.

Certain exemplary embodiments may provide a method including transmitting, by an apparatus, a first signal to a relay device indicating that a condition has been satisfied and determining, by the apparatus, whether a radio link failure with a network entity exists based on whether a second signal is received a specified number of times from the relay device.

Some exemplary embodiments may provide a method including receiving, by an apparatus, a first signal from a user equipment indicating that a condition has been satisfied and transmitting, by the apparatus, operating state information of the user equipment to a network entity. The method may also include transmitting, by the apparatus, one or more second signals to the user equipment relaying a reference signal or a data transmission from the network entity to the user equipment.

Various exemplary embodiments may provide a method including transmitting, by an apparatus, configuration information of a relay device to a user equipment and receiving, by the apparatus, operating state information of the user equipment from the relay device. The method may also include transmitting, by the apparatus, a reference signal or data transmission to the relay device to be relayed to the user equipment by the relay device.

Certain exemplary embodiments may provide an apparatus including means for transmitting a first signal to a relay device indicating that a condition has been satisfied and means for determining whether a radio link failure with a network entity exists based on whether a second signal is received a specified number of times from the relay device.

Various exemplary embodiments may provide an apparatus including means for receiving a first signal from a user equipment indicating that a condition has been satisfied and means for transmitting operating state information of the user equipment to a network entity. The apparatus may also include means for transmitting one or more second signals to the user equipment relaying a reference signal or a data transmission from the network entity to the user equipment.

Some exemplary embodiments may provide an apparatus including means for transmitting configuration information of a relay device to a user equipment and means for receiving operating state information of the user equipment from the relay device. The apparatus may also include means for transmitting a reference signal or data transmission to the relay device to be relayed to the user equipment by the relay device.

Certain exemplary embodiments may provide a non-transitory computer readable medium comprising program instructions that, when executed by an apparatus, cause the apparatus at least to transmit a first signal to a relay device indicating that a condition has been satisfied and determine whether a radio link failure with a network entity exists based on whether a second signal is received a specified number of times from the relay device.

Various exemplary embodiments may provide a non-transitory computer readable medium comprising program instructions that, when executed by an apparatus, cause the apparatus at least to receive a first signal from a user equipment indicating that a condition has been satisfied and transmit operating state information of the user equipment to a network entity. The apparatus may also be caused to transmit one or more second signals to the user equipment relaying a reference signal or a data transmission from the network entity to the user equipment.

Some exemplary embodiments may provide a non-transitory computer readable medium comprising program instructions that, when executed by an apparatus, cause the apparatus at least to transmit configuration information of a relay device to a user equipment and receive operating state information of the user equipment from the relay device. The apparatus may also be caused to transmit a reference signal or data transmission to the relay device to be relayed to the user equipment by the relay device.

Certain exemplary embodiments may provide one or more computer programs including instructions stored thereon for performing one or more of the methods described herein. Some exemplary embodiments may also provide one or more apparatuses including one or more circuitry configured to perform one or more of the methods described herein.

### BRIEF DESCRIPTION OF THE DRAWINGS:

For proper understanding of example embodiments, reference should be made to the accompanying drawings, as follows:
FIG. 1 illustrates an example of representative power consumption profiles during DRX mode;
FIG. 2 illustrates examples of a topography for an ambient IoT device network configuration;
FIG. 3 illustrates a configuration of a network, according to certain exemplary embodiments;
FIG. 4 illustrates an exemplary flow diagram of the conditional D2D procedures, according to certain exemplary embodiments;
FIG. 5 illustrates examples of the legacy and extend RLF procedures for D2D communications, according to various exemplary embodiments;
FIG. 6 illustrates an example of a signal diagram for identifying a connectivity outage or blockage in a network, according to some exemplary embodiments;
FIG. 7 illustrates an example of a signal diagram for conditional D2D relaying, according to certain exemplary embodiments;
FIG. 8 illustrates an example of a flow diagram of a method, according to various exemplary embodiments;
FIG. 9 illustrates an example of a flow diagram of another method, according to certain exemplary embodiments;
FIG. 10 illustrates an example of a flow diagram of a further method, according to some exemplary embodiments; and
FIG. 11 illustrates a set of apparatuses, according to various exemplary embodiments.

### DETAILED DESCRIPTION:

It will be readily understood that the components of certain example embodiments, as generally described and illustrated in the figures herein, may be arranged and designed in a wide variety of different configurations. The following is a detailed description of some exemplary embodiments of systems, methods, apparatuses, and non-transitory computer program products for conditional device-to-device communications for ambient Internet of Things (IoT) devices. Although the devices discussed below and shown in the figures refer to 5G or Next Generation NodeB (gNB) devices and user equipment devices, this disclosure is not limited to only gNBs and UEs.

It may be readily understood that the components of certain example embodiments, as generally described and illustrated in the figures herein, may be arranged and designed in a wide variety of different configurations. Different reference designations from multiple figures may be used out of sequence in the description, to refer to a same element to illustrate their features or functions. If desired, the different functions or procedures discussed herein may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

In 5G/NR technology, certain internet of things (IoT) devices, such as NR reduced capability (RedCap) UE devices, have been developed to provide low cost and low power devices for wide area IoT communications. The number of IoT connections has been growing rapidly in recent years. As the number of interconnections increases, there is a need for reducing the size, cost, and power consumption for IoT devices. RedCap UEs may be applied in various IoT use cases. RedCap UEs may be targeted to meet design requirements of lower device cost and complexity compared with eMBB and URLLC devices. RedCap UEs may also benefit from improved power consumption management, such as, for example, longer battery life than an NR UE. The RedCap UEs may have a reduced bandwidth, for example, in a range of 5-20 MHz. The RedCap UEs may also have a lower number of multiple-input multiple-output (MIMO) layers, a relaxation of downlink (DL) modulation order, reduced required receive branches, and a half-duplex operation which significantly drops the material cost in terms of radio frequency (RF) components and antennas, such as by up to 71%. Similarly, ambient IoT devices may provide, for example, range extension, improved accuracy of positioning, and avoiding blockage.

The RedCap UEs may be implemented in a variety of use cases, such as wearable devices, industrial wireless sensors, and video surveillance, which may require different data rates, latency, reliability, and battery lifetime. RedCap UEs may reduce the RF component chains resulting in lower power consumption and longer battery life. The RedCap UE may reduce the Physical Downlink Control Channel (PDCCH) monitoring by using extended DRX (eDRX) and radio resource management (RRM) relaxation techniques to save power consumption of the RedCap UE.

The loT devices may enter a radio resource control (RRC)_connected state and, subsequently, an RRC_idle state (during which a device may go into a sleep mode) in order to reduce power consumption when active communications are not needed. In the RRC_idle state, the UE reduces power consumption and improves battery life. A wake-up signal (WUS) may be transmitted to the UE, for example, over a physical downlink control channel (PDCCH) that "wakes up" the UE in the RRC_idle state so that the UE may prepare to receive data. Power consumption may depend on a length of a wake-up period.

IoT UE devices and/or RedCap UEs may need to periodically wake up once per discontinuous reception (DRX) cycle, which dominates the power consumption. If the loT devices and/or RedCap UEs can wake up only when they are triggered, e.g., by a WUS, power consumption may be reduced. The WUS may trigger a main radio and a separate receiver that can monitor WUSs with ultra-low power consumption. The UE behavior for monitoring WUSs may be configured by a signal design and a hardware module of the wake-up receiver (WRx) used for signal detection and processing. In each wake-up cycle (w-cycle), the WRx may monitor a set of specified subcarriers for a short duration of time to determine whether the WRx receives a wake-up indicator (WI). Through the WI, the network may inform a UE to decode a physical downlink control channel (PDCCH) with a specified time offset (w-offset). Once the WRx successfully detects the WI, a baseband processor (BBP) may be operated, e.g., switched on. The BBP may monitor and decode PDCCH messages in an active state for a preconfigured on-duration period, which may be followed by the initiation of an inactivity timer. After the inactivity timer is initiated, and if a new PDCCH message is received before the inactivity timer expires, the BBP may re-initiate its inactivity timer. However, if there is no PDCCH message received before the expiration of the inactivity timer, a sleep period may start in which the UE may switch to a sleep state and the WRx operates according to the w-cycle.

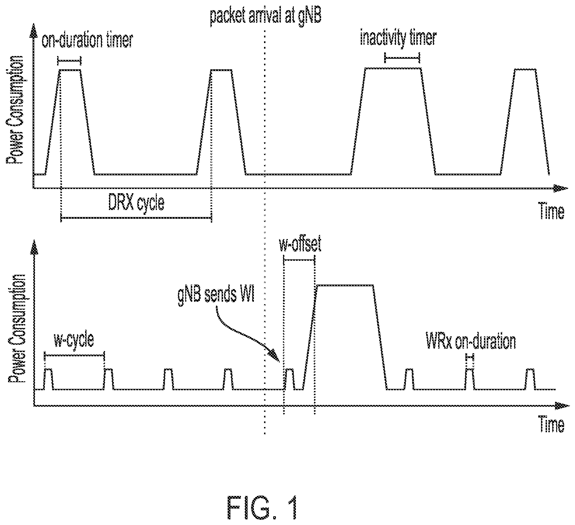

FIG. 1 illustrates an example of representative power consumption profiles during DRX mode. The WUS may reduce energy consumption of the UE as compared to baseline DRX as the energy consumption related to decoding PDCCHs unnecessarily is avoided. Since the w-cycle may be relatively short without increasing the energy consumption, the buffering delay may be reduced compared to DRX. RedCap UEs may use WUSs for shortening the active time of the device and reducing energy consumption to achieve power-saving gains. WUS may avoid unnecessary energy consumption and reduce PDCCH monitoring.

Conventionally, RedCap UEs may not have supported device-to-device (D2D) communication to ensure energy efficiency and longer battery life. To synchronize with neighboring UEs, additional signaling may be required for the RedCap UE to implement D2D which increases the power consumption as well as interference. Further, on certain occasions, a RedCap UE may not communicate due to synchronization issues, and thus may not be able to perform D2D.

Ambient IoT devices, including RedCap UEs, may rely on energy harvesting. Energy harvesting may be used in a variety of cases by which a UE can harvest and store a limited amount of energy (e.g., using light, RF, solar, etc.) when available. Sensors in the UE may be powered by solar energy. The maximum transmission (Tx) power of the ambient IoT devices may be significantly smaller due to smaller battery size or the absence of a battery. Ambient IoT devices may be used for a variety of cases, such as for delay-tolerant IoT-type of traffic (e.g., reporting temperature, traffic conditions, etc.).

Ambient IoT devices may be a variety of different types. As non-limiting examples, the ambient IoT devices may be: device type-A having no energy storage and no independent signal generation, such as backscattering transmission; device type-B having an energy storage which may amplify a reflected signal and no independent signal generation; and device type-C having energy storage and independent signal generation, such as an active RF component for transmission. Ambient IoT devices of device type-C may be device type-C1 that is triggered by backscatter technology which may be mobile terminated (MT) devices and may allow for time-shifted response transmission to avoid requirement or full duplex activator in monostatic configuration, or may be device-type C2 with full capabilities to perform both network registration (uplink and downlink) and both mobile originated and MT operations.

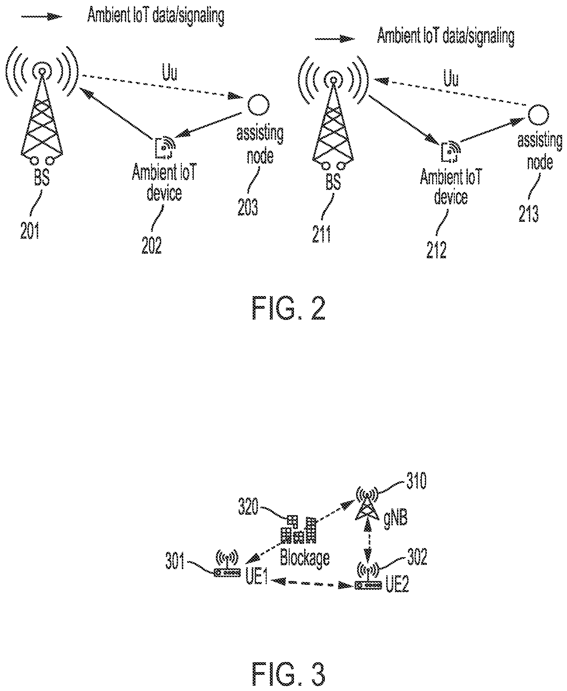

FIG. 2 illustrates examples of a topography for an ambient IoT device network configuration. Ambient IoT devices may be supported on various topologies, such as so-called Topology 3. In Topology 3, the ambient IoT device may transmit data/signaling to a base station (BS) and may receive data/signaling from an assisting node. Alternatively, the ambient IoT device may receive data/signaling from a base station and may transmit data/signaling to the assisting node. In Topology 3, the assisting node may be a relay node, an integrated access and backhaul (IAB) node, a UE, a repeater, and the like, which may function as an ambient IoT device. FIG. 2 shows a Topology 3 configuration for downlink and uplink assistance. In the uplink assistance scenario, a BS 201 may receive data/signaling from an ambient IoT device 202 and the ambient IoT device 202 may receive data/signaling from an assisting node 203. In the downlink assistance scenario, a BS 211 may transmit data/signaling to an ambient IoT device 212 and the ambient IoT device 212 may transmit (and/or backscatter) data/signaling to an assisting node 213.

An implementation of ambient IoT devices may be in the automotive industry to advance automotive safety. Direct NR UE-UE communication through a sidelink relay has been known to support automotive communications, such as vehicle-to-vehicle (V2V) and vehicle-to-everything (V2X) communications. In UE-to-Network relaying, a relay UE may transfer packets between a base station and a remote UE. The technique may assign functionalities of the base station to a remote UE and a relay UE for the relaying services. To select sidelink radio resources, the base station may transmit sidelink-measurement configurations to at least one remote UE and at least one relay UE, which may include additional configurations, measurements, and reporting.

In D2D communication, a first step may be device discovery which involves discovering the Proximity Services (ProSe) enabled UEs within the communication range for D2D communication. The device discovery may include a mutual discovery process between two or multiple UEs. However, there are several disadvantages of typical or legacy discovery signal based D2D communications. The discovery process may use a relatively large set of additional resource allocations from the base station for the discovery process and signaling, which lowers resource utilization efficiency. A single UE, or multiple UEs, may discover other UEs by detecting the discovery signals in specific time-frequency resources. If two UEs use the same time-frequency resources, they cannot discover each other. If the target UE does not know the time-frequency resources, the UE may anticipate or be searching for discovery signals. As a consequence, the UE may perform blind detection resulting in higher complexity and energy consumption.

Ambient IoT devices may be used with and connected to wireless sensors for various applications. In wireless communications using ambient IoT devices, various factors may affect a quality of service (QoS) of the communications and may result in a connectivity outage for wireless devices, which may be connected to sensors. Non-limiting examples of the factors may include physical obstructions causing line-of-sight (LOS) blockage, strong interference from the other active devices in cell, UE power outage, dynamic weather conditions, UE software-related issues, and UE hardware-related issues.

For an example related to LOS blockage, in areas with a single gNB, such as remote areas or a small industrial setup, and where a temporary blockage occurs, UEs cell search operation may not be beneficial to recover the failures and outage. As another example, in various industrial setups, such as, for example, windfarms, UEs with sensors, and gNB could be stationary. In case of a blockage between a UE and a gNB, the communication may be fully interrupted. Since there are no other gNBs in the network, there would be no alternative communication path for the UEs.

Various exemplary embodiments may advantageously provide one or more procedures to accurately and reliably determine or identify the cause of an outage and resolve the outage for ensuring a higher QoS.

FIG. 3 illustrates a configuration of a network, according to certain exemplary embodiments. The network may include one or more UEs 301/302, such as a RedCap UE or other ambient IoT device, in which communications between the UE 301 and a base station 310, such as a gNB, may be blocked by a blockage 320. To address the blockage 320, a conditional D2D communication may be implemented, which is both signaling and power efficient. In certain exemplary embodiments, it may be assumed that the gNB 310 has already shared the D2D configuration beforehand with UEs 301/302.

The D2D configurations may include, for example, wake-up information including cycles and duration. UE 301 may have information on when and how long a relay UE wakes up. The wake-up information may be for ambient IoT C2 type devices (e.g., non-backscattering) and RedCap devices or an NR UE supporting RedCap and/or ambient IoT devices. As further examples, the D2D configuration may include a T310 timer value selection algorithm for the UE 301, such as for selecting a legacy timer or an extended T310 timer, which depends on a relay UE time to wake-up, and may include UEs pairing information, which may be determined in advance.

If the next wake-up time of the relay UE occurs only after a certain time has passed since the detection of the blockage, the UE 301 may use a legacy (non-extended) T310 timer and legacy radio link failure (RLF) declaration procedure. If the next wake-up time of the relay UE occurs within a certain time after the detection of the blockage, UE 301 may extend the T310 timer according to the relay UE wake-up cycle and processing time, thereby enabling UE 301 to communicate with the relay UE prior to RLF declaration to utilize the conditional D2D scheme according to various exemplary embodiments. An alternative embodiment may be stopping or suspending the timer T310 until UE 301 can communicate with the relay UE or determine that the UE relay is not available.

The UE 301 may be configured with an extended T310 timer value by the network. In this case, the UE 301 may check or determine whether at least one wake-up time of the relay UE remains before the extended T310 timer expires. If there is at least one wake-up time of the relay UE before the extended T310 timer expires, the UE 301 may determine to use the extended T310 timer. If there is no wake-up time of the relay UE before the extended T310 timer expires, the UE 301 may determine to use the legacy (non-extended) T310 timer. Certain exemplary embodiments may avoid extending the T310 timer unnecessarily in case where the UE 301 would not have an ability to transmit a pre-RLF query to the relay UE.

Since UE 301 knows the configuration of relay UE, in case of determination of blockage while the extended T310 is running, UE 301 may transmit a pre-RLF Query (i.e., a D2D signal) requesting connectivity support for the relay UE during an active period of the relay UE. As a response, the relay UE may transmit reference signals (e.g., synchronization signals) to establish the connection. If UE 301 receives synchronization signals from the relay UE, the UE 301 may stop the extended T310 timer and may not declare RLF as discussed in more detail later. If UE 301 does not receive any synchronization signals and the extended T310 expires, the UE 301 may declare RLF.

Various exemplary embodiments may aim to not initiate re-establishment if another path is available quickly. As an alternative, upon T310 expiring, a new timer may be started to determine whether the relay UE can be available within a period. Within this period, if sync is acquired, RLF declaration may not cause initiation of connection re-establishment with the gNB. If the indirect path is not available within this period, RLF may cause initiation of connection re-establishment with the gNB. Thus, RLF may be detected and whether to initiate connection re-establishment with the gNB or not may be based on whether in-sync condition (based on receiving synchronization signals) is reached using the additional path within a time duration.

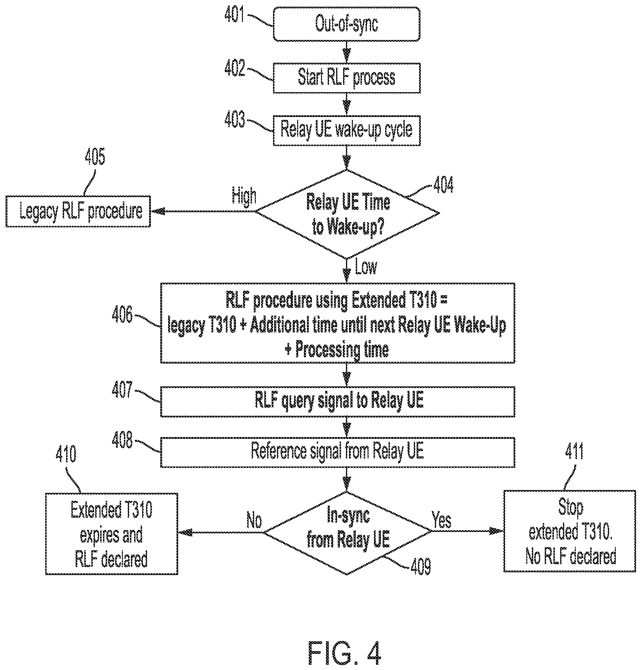

FIG. 4 illustrates an exemplary flow diagram of the conditional D2D procedures, according to certain exemplary embodiments. At 401, an ambient IoT UE may determine that it is out-of-sync with the gNB. For example, a certain number N310 of consecutive out-of-sync indications may be received from lower layers where the out-of-sync indication may be based on not detecting a synchronization signal from the gNB. At 402, the ambient IoT UE may initiate an RLF process (e.g., a legacy timer T310 may be started). At 403, the ambient IoT UE may determine that it is currently within a wake-up cycle of a relay UE. At 404, during the wake-up cycle of the relay UE, the ambient IoT UE may evaluate a length of time to the relay UE's next wake-up (e.g., the start of the relay UE's next wake-up cycle). At 405, when the time to the relay UE's next wake-up is relatively high (or long), such as, for example, an amount of time greater than a time until an expiration of the legacy timer T310, the ambient IoT UE may perform a legacy RLF procedure using the legacy T310 timer. At 406, when the time to the relay UE's next wake-up is relatively low (or short), such as, for example, an amount of time less than the time until an expiration of the legacy timer T310, the ambient IoT UE may perform an RLF procedure using an extended T310 timer in which the extended T310 timer is the sum of the legacy T310 timer, additional time until the relay UE's next wake-up (defined as the difference between the time to the relay UE's next wake-up and the time till the expiration of the legacy timer T310), and processing time.

At 407, the ambient IoT UE may transmit an RLF query signal to the relay UE, and at 408, the ambient IoT UE may receive a reference signal from the relay UE. At 409, the ambient IoT UE may determine whether it has reached an in-sync condition with the relay UE (e.g., a certain number N311 of consecutive in-sync indications are received from lower layers where the in-sync indication may be based on detecting the reference signal from the relay UE) or not. At 410, when the ambient IoT UE has not reached the in-sync condition with the relay UE, the extended T310 timer may be allowed to expire and an RLF is determined or declared. At 411, when the ambient IoT UE has reached the in-sync condition with the relay UE, the extended T310 timer may be stopped and no RLF is determined or declared.

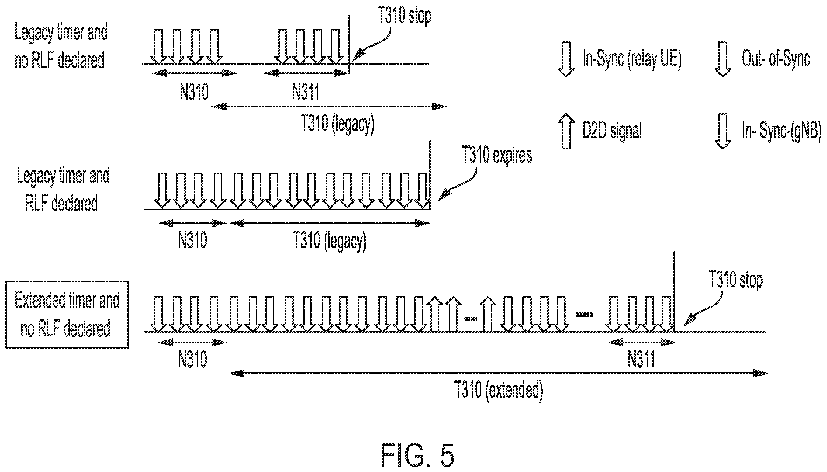

FIG. 5 illustrates examples of the legacy and extend RLF procedures for D2D communications, according to various exemplary embodiments. FIG. 5 shows the timer period using legacy and extended T310 timers and the receiving of in-sync and out-of-sync indications from lower layers based on, for example, the receiving of signals such as reference signals, synchronization signals, and the like, and the transmitting of D2D signals and the like. For example, in the first row of FIG. 5, a legacy RLF procedure may be shown where after a certain number of out-of-sync indications, a UE may be recovered with a certain number of in-sync indications from a serving cell within a timer period of a T310 timer so that RLF is not declared. In the second row, another legacy procedure may be shown similar to the first row, but the UE may continuously receive out-of-sync indications from the serving cell for the T310 timer so that RLF is declared. In the third row, an extended RLF procedure according to certain exemplary embodiments may be shown where an RLF timer may be extended based on a relay UE time to wake-up such that the UE may be recovered using the relay UE following, for example, a certain number of in-sync indications from relay UE, and thus RLF may be avoided.

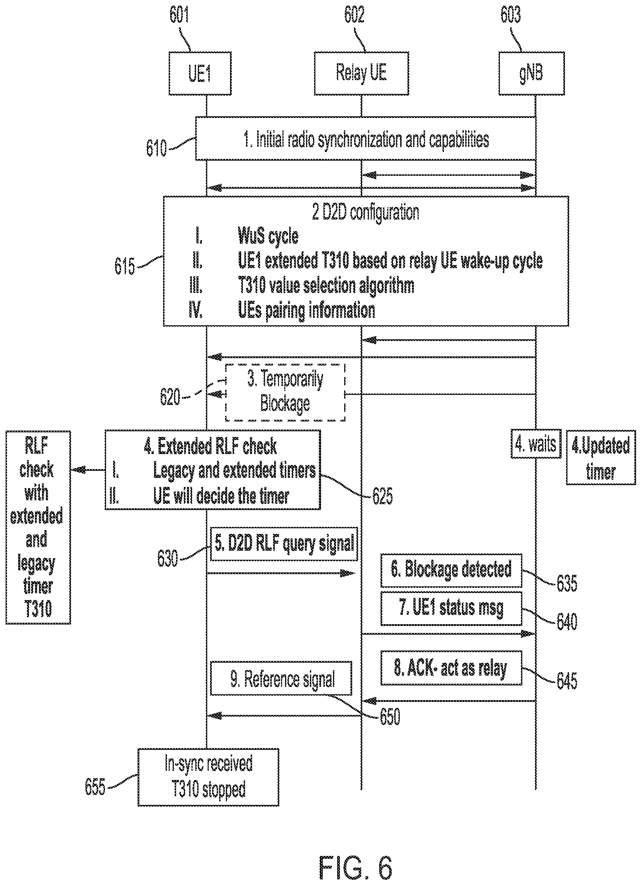

FIG. 6 illustrates an example of a signal diagram for identifying a connectivity outage or blockage in a network, according to certain exemplary embodiments. The network may include an ambient IoT UE 601, a relay UE 602, and a gNB 603. At 610, all the UEs in the network, including the ambient IoT UE 601 and relay UE 602, may synchronize and share initial radio synchronization and capabilities with the gNB 603. At 615, the gNB 603 may transmit D2D configuration to the ambient IoT UE 601 and the relay UE 602, for example, before an outage occurs. The gNB 603 may transmit D2D configurations for the relay UE 602 to the ambient IoT UE 601. The D2D configurations may include, for example, (i) one or more wake-up cycles, which may inform the ambient IoT UE 601 of when the relay UE 602 wakes up; (ii) UE pairing information, and the extended T310 timer. The UE pairing information may be information for relaying, such as bearer mapping and local UE ID for the ambient IoT UE 601 provided in advance before RLF. The relay setup may be completed before detecting an outage. The ambient IoT UE 601 may use a direct path until an outage is detected and may switch to an indirect path after the outage is resolved by getting in-sync indications based on reference signals received via the relay UE. Relay configurations may be used/activated after the ambient IoT UE 601 gets in-sync via the relay UE 602.

The ambient IoT UE 601 may extend the T310 timer based on the relay UE wake-up cycle, which may satisfy the following equation: Extended T310 = legacy T310 + Additional time until the relay UE's next Wake-Up + Processing time. The additional time until the relay UE's next Wake-Up in this equation may be defined as the difference between the time to the relay UE's next wake-up and the time until the expiration of the legacy timer T310. The processing time in this equation may be the time for the relay UE resynchronize over both Uu and D2D, where Uu may be an interface between the RAN and the ambient IoT UE 601 and/or the relay UE 602. For example, the ambient IoT UE 601 may suspend RLF monitoring until a legacy T310 timer expires or before sending pre-RLF query to relay UE and then may start monitoring in-sync/out-of-sync indications from lower layers again after sending pre-RLF query to the relay UE. The T310 timer value selection algorithm e.g., legacy or extended T310, may depend on the relay UE 602 time to next wake up. The ambient loT UE 601 may decide which timer to follow using, for example, the conditional D2D procedures described with respect to FIG. 4.

At 620, the ambient IoT UE 601 and/or the gNB 603 may determine or detect a blockage between the ambient IoT UE 601 and the gNB 603. The ambient IoT UE 601 may determine the blockage based on a certain number of out-of-sync indications from lower layers. The gNB 603 may detect the blockage and determine the ambient IoT UE 601 may be performing a radio link failure process. The gNB 603 may determine the blockage when (i) a sounding reference signal (SRS) power (e.g., a signal interference to noise ratio (SINR)) from the ambient IoT UE 601 may be much lower (e.g., lower than a threshold power) than the SRS power configured by the gNB 603 for the ambient IoT UE 601, and/or (ii) the gNB 603 may not be able to detect a sufficient negative acknowledgement (NACK) or acknowledgement (ACK) from the ambient IoT UE 601 for PDSCH.

At 625, the ambient IoT UE 601 may determine whether the legacy T310 timer or extended T310 timer is used to declare RLF. If the relay UE time to next wake-up is too long, the ambient IoT UE 601 may use the legacy T310 timer and legacy RLF procedure. If the relay UE time to next wake-up is not too long, the ambient loT UE 601 may extend the T310 timer according to the relay UE wake-up time and processing time. As an alternative in certain exemplary embodiments, the ambient IoT UE 601 may be configured with an extended T310 timer value by the network. In this case, the ambient IoT UE 601 may check or determine whether there is at least one wake-up time of the relay UE 602 before the extended T310 timer expires. If there is at least one wake-up time of the relay UE 602 before expiry of the extended T310 timer, the ambient IoT UE 601 may determine to use the extended T310 timer. When there is no wake-up time of the relay UE 602 before expiry of the extended T310 timer, the ambient IoT UE 601 may determine to use the legacy T310 timer.

At 630, during the pendency of the extended T310 timer, the ambient IoT UE 601 may transmit a pre-RLF query, which may be a D2D signal to the relay UE 602 during the active interval of the relay UE 602, such as during the wake-up/DRX cycle. The D2D signal may be either a wake-up signal, a dynamic control point (DCP), or any other signal. At 635, the relay UE 602 may decode the ambient IoT UE 601 signals and may confirm the ambient IoT UE 601 is operational. The pre-RLF query/D2D signal may inform the relay UE 602 that the ambient IoT UE 601 is active and experiencing an outage or blockage with the gNB 603.

At 640, the relay UE 602 may inform the gNB 603 about the status of the ambient IoT UE 601, such as indicating that the ambient loT UE 601 is active/alive. At 645, the gNB 603 may request the relay UE 602 to act as a relay. At 650, the relay UE 602 may transmit reference signals (e.g., synchronization signals) to establish a connection with the ambient IoT UE 601. At 655, after receiving a certain consecutive number of in-sync indications from the lower layers based on receiving reference signals from the relay UE 602, the ambient IoT UE 601 may stop the extended T310 timer to prevent RLF declaration. For example, a counter may be used for the in-sync indications N311_Relay from lower layers based on receiving reference signals from the relay UE 602 which may be different from a legacy N311 counter which is used for signals from the gNB 603. For example, the N311_Relay may be lower than legacy N311 counter). For urgent transmission, the ambient IoT UE 601 may respond back to the relay UE 602 for the confirmation of data reception with ACK message. Similarly, the relay UE 602 may forward the ACK to the gNB 603 which confirms the ambient IoT UE 601 has received the data.

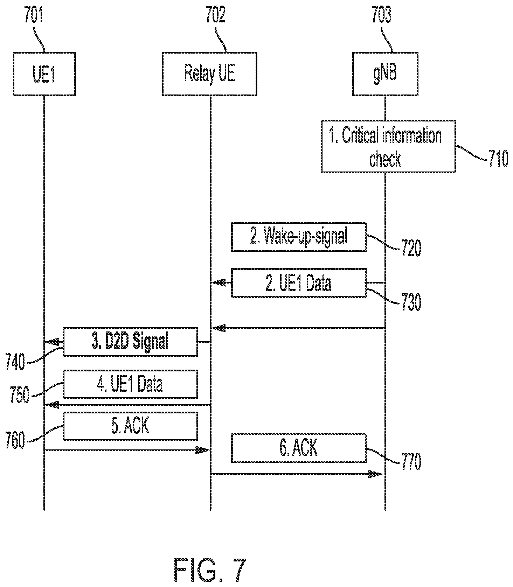

FIG. 7 illustrates an example of a signal diagram for conditional D2D relaying, according to certain exemplary embodiments. The network may include an ambient IoT UE 701, a relay UE 702, and a gNB 703, which are similar to the devices of FIG. 6. At 710, the gNB 703 may perform a critical information check to access the pending information when the ambient IoT UE 701 is indicated as being active/alive. At 720, the gNB 703 may transmit a wake-up signal to the relay UE 702 and request that the relay UE 702 act as a relay with the ambient IoT UE 701. At 730, the gNB 703 may transmit information related to the ambient IoT UE 701. At 740, the relay UE 702 may transmit a D2D signal to the ambient IoT UE 701 to wake up the ambient IoT UE 701. The D2D signal may inform the ambient IoT UE 701 about any scheduled data from the gNB 703.

At 750, the relay UE 702 may transmit/forward data from the gNB 703 acting as a relay. At 760, the ambient IoT UE 701 may respond to the relay UE 702 by sending an ACK message to confirm receipt of the data. At 770, the relay UE 702 may transmit/forward the ACK message from the ambient IoT UE 701 to the gNB 703 to confirm for the gNB 703 that the ambient IoT UE 701 received the data.

Various exemplary embodiments may provide technological advantages for energy efficient conditional device-to-device communication procedures using low-power signals. Certain exemplary embodiments may require less signaling in comparison to a legacy D2D by not requiring a discovery process that involves high signaling and consumes a large set of additional resources. Further, some exemplary embodiments may allow communication between a gNB and a desired UE when the gNB cannot directly communicate with the desired UE due to LOS blockage, strong interference, or dynamic weather conditions. Certain exemplary embodiments therefore advantageously provide for blockage identification, improved reliability, improved throughput, enhancing the cell coverage, and improved connectivity.

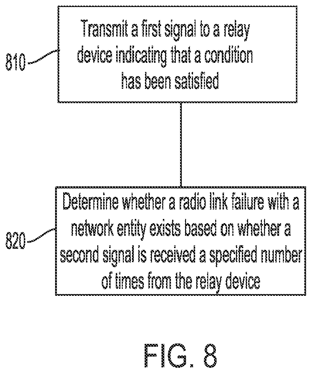

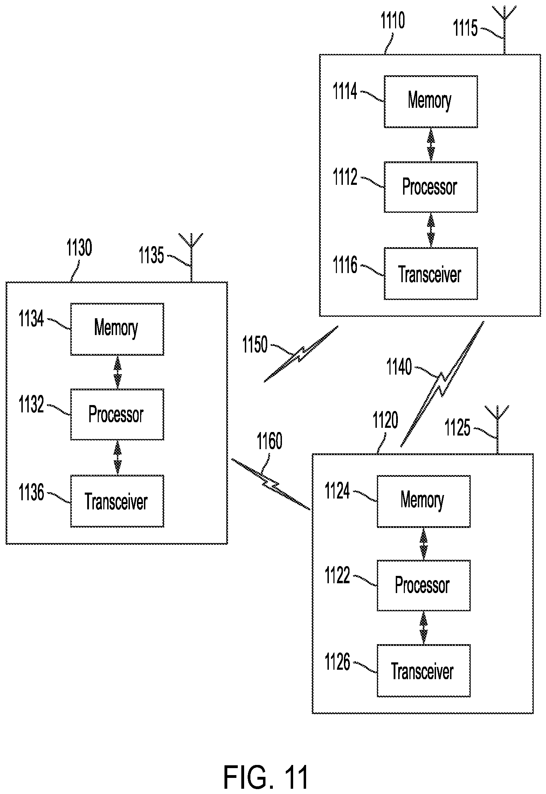

FIG. 8 illustrates an example flow diagram of a method, according to certain exemplary embodiments. In an example embodiment, the method of FIG. 8 may be performed by a network element, or a group of multiple network elements in a 3GPP system, such as LTE or 5G-NR. For instance, in an exemplary embodiment, the method of FIG. 8 may be performed by a user device, mobile device, etc., such as an ambient IoT UE, similar to apparatus 1110 illustrated in FIG. 11.

According to various exemplary embodiments, the method of FIG. 8 may include, at 810, transmitting, by an apparatus, a first signal to a relay device indicating that a condition has been satisfied, and at 820, determining, by the apparatus, whether a radio link failure with a network entity exists based on whether a second signal is received a specified number of times from the relay device.

Various exemplary embodiments may provide that the condition is set by radio resource control and the condition is satisfied by the apparatus receiving consecutive out of synchronization indications with the network entity. The method may also include determining the relay device is in an active period based on configuration information related to a wake-up signal. The configuration information may be received from the network entity and the first signal may be transmitted to the relay device while the relay device is determined to be in the active period.

Certain exemplary embodiments may provide that the method includes monitoring for the second signal from the relay device in response to the first signal. The second signal may be a reference signal or a data transmission from the relay device and the second signal may be monitored during a time period after the first signal is transmitted. The radio link failure may be determined based on the second signal not being received for the specified number of times within the time period. There may be no determination of the radio link failure when the second signal is received for the specified number of times within the time period. A PC5 connection may be established with the relay device before the condition is satisfied.

Some exemplary embodiments may provide that transmission or reception with the relay device is suspended when the PC5 connection is established with the relay device. The suspension of the transmission to the relay device may be terminated, when the second signal is received for the specified number of times within the time period. The method may also include starting one of a first timer or a second timer such that the time period ends with the expiration of the started one timer of the first timer or the second timer. The first timer may be a legacy timer and the second timer may be an extended timer. The first timer may be started if there is no wake-up time for the relay device before an expiration of the second timer and the second timer may be started if there is wake-up time for the relay device before the expiration of the second timer. The method may also include stopping the second timer when the second signal is received for the specified number of times from the relay device before the expiration of the second timer.

Various exemplary embodiments may provide that the second signal includes a device-to-device signal to wake-up the apparatus and inform the apparatus of scheduled data from the network entity. The method may also include transmitting a response comprising an acknowledgment message to the relay device confirming reception of the second signal and may include transmitting a query signal requesting connectivity support for the relay device during an active period of the relay device.

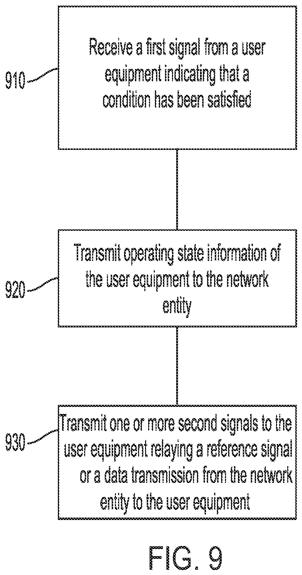

FIG. 9 illustrates an example flow diagram of a method, according to certain exemplary embodiments. In an example embodiment, the method of FIG. 9 may be performed by a network element, or a group of multiple network elements in a 3GPP system, such as LTE or 5G-NR. For instance, in an exemplary embodiment, the method of FIG. 9 may be performed by another user device, mobile device, etc., such as a relay UE, similar to apparatus 1120 illustrated in FIG. 11.

According to various exemplary embodiments, the method of FIG. 9 may include, at 910, receiving a first signal from a user equipment indicating that a condition has been satisfied, and at 920, transmit operating state information of the user equipment to a network entity. At 930, the method may also include transmitting one or more second signals to the user equipment relaying a reference signal or a data transmission from the network entity to the user equipment.

Certain exemplary embodiments may provide that the method also includes determining an operating state of the user equipment by decoding the operating state information and confirming that the user equipment is operational. The transmitting of the operating state information to the network entity may include informing the network entity of an operating state of the user equipment. The method may further include relaying an acknowledgement message from the user equipment to the network entity which confirms the user equipment received the reference signal or data transmission. A PC5 connection may be established with the user equipment before a condition is satisfied that results in the first signal being transmitted from the user equipment and received by the apparatus 1120.

Some exemplary embodiments may provide that transmission or reception with the user equipment is suspended when the PC5 connection is established with the user equipment. The second signal may include a device-to-device signal to wake-up the user equipment and inform the user equipment of scheduled data from the network entity. The method may also include receive, from the user equipment, a response comprising an acknowledgment message confirming reception of the second signal. The method may also include receive a query signal requesting connectivity support for the apparatus during an active period of the apparatus 1120.

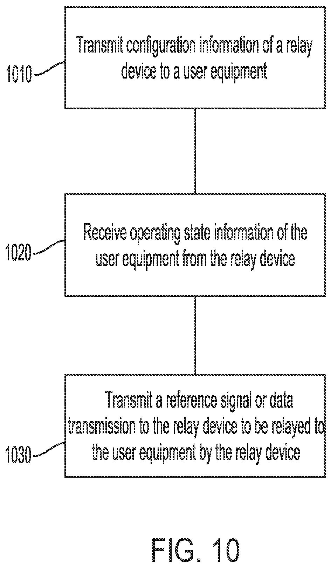

FIG. 10 illustrates an example flow diagram of a method, according to certain exemplary embodiments. In an example embodiment, the method of FIG. 10 may be performed by a network element, or a group of multiple network elements in a 3GPP system, such as LTE or 5G-NR. For instance, in an exemplary embodiment, the method of FIG. 10 may be performed by a network device or network entity, such as a base station or gNB, similar to apparatus 1130 illustrated in FIG. 11.

According to various exemplary embodiments, the method of FIG. 10 may include, at 1010, transmitting configuration information of a relay device to a user equipment, and 1020, receiving operating state information of the user equipment from the relay device. The method may further include, at 1030, transmitting a reference signal or data transmission to the relay device to be relayed to the user equipment by the relay device.

Various exemplary embodiments may provide that the configuration information of the relay device may include wake up cycles of the relay device, pairing information, or an extended timer. The operation state information may include an indication of an operating state of the user equipment. The method may further include transmitting a request to the relay device requesting that the relay device act as a relay between the apparatus and the user equipment. The request to the relay device may include information to be relayed to the user equipment.

FIG. 11 illustrates apparatuses 1110, 1120, and 1130 according to various exemplary embodiments. In the various exemplary embodiments, apparatus 1110 may be an element in a communications network or associated with such a network, such as a UE, RedCap UE, ambient IoT UE, SL UE, mobile equipment (ME), mobile station, mobile device, stationary device, ambient IoT device, or other device. Ambient IoT UEs 301, 601, and 701 may be an example of apparatus 1110 according to various exemplary embodiments as discussed above. It should be noted that one of ordinary skill in the art would understand that apparatus 1110 may include components or features not shown in FIG. 11. Further, the apparatus 1120 may be an element in a communications network or associated with such a network, such as a UE, RedCap UE, relay UE, SL UE, mobile equipment (ME), mobile station, mobile device, stationary device, ambient IoT device, or other device. Ambient IoT UEs 302, 602, and 702 may be an example of apparatus 1110 according to various exemplary embodiments as discussed above. It should be noted that one of ordinary skill in the art would understand that apparatus 1120 may include components or features not shown in FIG. 11. In addition, an apparatus 1130 may be a network entity, element of the core network, or element in a communications network or associated with such a network, such as a base station, an NE, or a gNB. For example, gNB 303, 603, and 703 may be an example of apparatus 1120 according to various exemplary embodiments as discussed above. It should be noted that one of ordinary skill in the art would understand that apparatus 1130 may include components or features not shown in FIG. 11.

According to various exemplary embodiments, the apparatuses 1110, 1120, and/or 1130 may include one or more processors, one or more computer-readable storage medium (for example, memory, storage, or the like), one or more radio access components (for example, a modem, a transceiver, or the like), and/or a user interface. In some exemplary embodiments, apparatuses 1110, 1120, and/or 1130 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 11, apparatuses 1110, 1120, and/or 1130 may include or be coupled to processors 1112, 1122, and 1132, respectively, for processing information and executing instructions or operations. Processors 1112, 1122, and 1132 may be any type of general or specific purpose processor. In fact, processors 1112, 1122, and 1132 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 1112 (1122 and 1132) for each of apparatuses 1110, 1120, and/or 1130 is shown in FIG. 11, multiple processors may be utilized according to other example embodiments. For example, it should be understood that, in certain example embodiments, apparatuses 1110, 1120, and/or 1130 may include two or more processors that may form a multiprocessor system (for example, in this case processors 1112, 1122, and 1132 may represent a multiprocessor) that may support multiprocessing. According to certain example embodiments, the multiprocessor system may be tightly coupled or loosely coupled to, for example, form a computer cluster).

Processors 1112, 1122, and 1132 may perform functions associated with the operation of apparatuses 1110, 1120, and/or 1130, respectively, including, as some examples, precoding of antenna gain/phase parameters, encoding and decoding of individual bits forming a communication message, formatting of information, and overall control of the apparatuses 1110, 1120, and/or 1130, including processes illustrated in FIGs. 4-9.

Apparatuses 1110, 1120, and/or 1130 may further include or be coupled to memory 1114, 1124, and/or 1134 (internal or external), respectively, which may be coupled to processors 1112, 1122, and 1132, respectively, for storing information and instructions that may be executed by processors 1112, 1122, and 1132. Memory 1114 (memory 1124 and 1134) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 1114 (memory 1124 and 1134) can be comprised of any combination of random access memory (RAM), read only memory (ROM), static storage such as a magnetic or optical disk, hard disk drive (HDD), or any other type of non-transitory machine or computer readable media. The instructions stored in memory 1114, memory 1124, and memory 1134 may include program instructions or computer program code that, when executed by processors 1112, 1122, and 1132, enable the apparatuses 1110, 1120, and/or 1130 to perform tasks as described herein.

In certain example embodiments, apparatuses 1110, 1120, and/or 1130 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 1112, 1122, and 1132 and/or apparatuses 1110, 1120, and/or 1130 to perform any of the methods illustrated in FIGs. 4-9.

In some exemplary embodiments, apparatuses 1110, 1120, and/or 1130 may also include or be coupled to one or more antennas 1115, 1125, and 1135, respectively, for receiving a downlink signal and for transmitting via an uplink from apparatuses 1110, 1120, and/or 1130. Apparatuses 1110, 1120, and/or 1130 may further include transceivers 1116, 1126, and 1136, respectively, configured to transmit and receive information. The transceivers 1116, 1126, and 1136 may also include a radio interface (for example, a modem) respectively coupled to the antennas 1115, 1125, and 1135. The radio interface may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 1116, 1126, and 1136 may be respectively configured to modulate information on to a carrier waveform for transmission by the antenna(s) 1115, 1125, and 1135, and demodulate information received via the antenna(s) 1115, 1125, and 1135 for further processing by other elements of apparatuses 1110, 1120, and/or 1130. In other example embodiments, transceivers 1116, 1126, and 1136 may be capable of transmitting and receiving signals or data directly. Additionally or alternatively, in some example embodiments, apparatuses 1110, 1120, and/or 1130 may include an input and/or output device (I/O device). In certain example embodiments, apparatuses 1110, 1120, and/or 1130 may further include a user interface, such as a graphical user interface or touchscreen.

In certain example embodiments, memory 1114, memory 1124, and memory 1134 store software modules that provide functionality when executed by processors 1112, 1122, and 1132, respectively. The modules may include, for example, an operating system that provides operating system functionality for apparatuses 1110, 1120, and/or 1130. The memory may also store one or more functional modules, such as an application or program, to provide additional functionality for apparatuses 1110, 1120, and/or 1130. The components of apparatuses 1110, 1120, and/or 1130 may be implemented in hardware, or as any suitable combination of hardware and software. According to certain example embodiments, apparatus 1110 may optionally be configured to communicate with apparatus 1120 and/or 1130 via a wireless or wired communications links 1140, 1150, and/or 1160 according to any radio access technology, such as NR.

According to certain example embodiments, processors 1112, 1122, and 1132, and memory 1114, 1124, and 1134 may be included in or may form a part of processing circuitry or control circuitry. In addition, in some example embodiments, transceivers 1116, 1126, and 1136 may be included in or may form a part of transceiving circuitry.

For instance, in certain exemplary embodiments, the apparatus 1110 may be controlled by the memory 1114 and the processor 1112 to transmit a first signal to a relay device indicating that a condition has been satisfied and determine whether a radio link failure with a network entity exists based on whether a second signal is received a specified number of times from the relay device.

In various exemplary embodiments, the apparatus 1120 may be controlled by the memory 1124 and the processor 1122 to receive a first signal from a user equipment indicating that a condition has been satisfied and transmit operating state information of the user equipment to a network entity. The apparatus 1120 may also be caused to transmit one or more second signals to the user equipment relaying a reference signal or a data transmission from the network entity to the user equipment.

In various exemplary embodiments, the apparatus 1130 may be controlled by the memory 1134 and the processor 1132 to transmit configuration information of a relay device to a user equipment and receive operating state information of the user equipment from the relay device. The apparatus 1130 may also be caused to transmit a reference signal or data transmission to the relay device to be relayed to the user equipment by the relay device.

In some exemplary embodiments, an apparatus (e.g., apparatus 1110, apparatus 1120, and/or apparatus 1130) may include means for performing a method, a process, or any of the variants discussed herein. Examples of the means may include one or more processors, memory, controllers, transmitters, receivers, and/or computer program code for causing the performance of the operations.

Various exemplary embodiments may be directed to an apparatus, such as apparatus 1110, that includes means for transmitting a first signal to a relay device indicating that a condition has been satisfied and means for determining whether a radio link failure with a network entity exists based on whether a second signal is received a specified number of times from the relay device.

Various exemplary embodiments may be directed to an apparatus, such as apparatus 1120, that includes means for receiving a first signal from a user equipment indicating that a condition has been satisfied and means for transmitting operating state information of the user equipment to a network entity. The apparatus 1120 may also include means for transmitting one or more second signals to the user equipment relaying a reference signal or a data transmission from the network entity to the user equipment.

Various exemplary embodiments may be directed to an apparatus, such as apparatus 1130, that includes means for transmitting configuration information of a relay device to a user equipment and means for receiving operating state information of the user equipment from the relay device. The apparatus 1130 may also include means for transmitting a reference signal or data transmission to the relay device to be relayed to the user equipment by the relay device.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 1110, 1120, and/or 1130) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (for example, apparatuses 1110, 1120, and/or 1130), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- BBP: Broadband Processor
- D2D: Device-to-Device
- DL: Downlink
- EMBB: Enhanced Mobile Broadband
- gNB: 5G or Next Generation NodeB
- IoT: Internet of Things
- LOS: Line of Sight
- LTE: Long Term Evolution
- MIMO: Multiple Input Multiple Output
- NR: New Radio
- RAN: Radio Access Network
- RedCap: Reduced Capability
- RLF: Radio Link Failure
- UE: User Equipment
- UL: Uplink
- WI: Wake-up Indicator
- WUS: Wake-up signal
- WRx: Wake-up receiver

Further aspects and exemplary embodiments are set out in the following numbered paragraphs:
1. An apparatus comprising:
   at least one processor; and
   at least one memory storing instructions that, when executed by the at least one processor, cause the apparatus at least to:
      transmit a first signal to a relay device indicating that a condition has been satisfied; and
      determine whether a radio link failure with a network entity exists based on whether a second signal is received a specified number of times from the relay device.
2. The apparatus according to paragraph 1, wherein the condition is set by radio resource control and the condition is satisfied by the apparatus receiving consecutive out of synchronization indications with the network entity.
3. The apparatus according to paragraph 1 or paragraph 2, wherein the at least one memory and the instructions, when executed by the at least one processor, further cause the apparatus at least to:
   determine the relay device is in an active period based on configuration information related to a wake-up signal,
   wherein the configuration information is received from the network entity, and
   wherein the first signal is transmitted to the relay device while the relay device is determined to be in the active period.
4. The apparatus according to any one of paragraphs 1-3, wherein the at least one memory and the instructions, when executed by the at least one processor, further cause the apparatus at least to:
   monitor for the second signal from the relay device in response to the first signal.
5. The apparatus according to paragraph 4, wherein the second signal is a reference signal or a data transmission from the relay device.
6. The apparatus according to paragraph 4 or paragraph 5, wherein the second signal is monitored during a time period after the first signal is transmitted.
7. The apparatus according to paragraph 6, wherein the radio link failure is determined based on the second signal not being received for the specified number of times within the time period.
8. The apparatus according to paragraph 6, wherein there is no determination of the radio link failure when the second signal is received for the specified number of times within the time period.
9. The apparatus according to any one of paragraphs 1-8, wherein a PC5 connection is established with the relay device before the condition is satisfied.
10. The apparatus according to paragraph 9, wherein transmission or reception with the relay device is suspended when the PC5 connection is established with the relay device.
11. The apparatus according to paragraph 10, wherein the suspension of the transmission to the relay device is terminated, when the second signal is received for the specified number of times within the time period.
12. The apparatus according to any one of paragraphs 6-11, wherein the at least one memory and the instructions, when executed by the at least one processor, further cause the apparatus at least to:
   start one of a first timer or a second timer such that the time period ends with the expiration of the started one timer of the first timer or the second timer,
   wherein the first timer is a legacy timer and the second timer is an extended timer, and
   wherein the first timer is started if there is no wake-up time for the relay device before an expiration of the second timer and the second timer is started if there is wake-up time for the relay device before the expiration of the second timer.
13. The apparatus according to paragraph 12, wherein the at least one memory and the instructions, when executed by the at least one processor, further cause the apparatus at least to:
   stop the second timer when the second signal is received for the specified number of times from the relay device before the expiration of the second timer.
14. The apparatus according to any one of paragraphs 1-13, wherein the second signal comprises a device-to-device signal to wake-up the apparatus and inform the apparatus of scheduled data from the network entity.
15. The apparatus according to any one of paragraphs 1-14, wherein the at least one memory and the instructions, when executed by the at least one processor, further cause the apparatus at least to:
   transmit a response comprising an acknowledgment message to the relay device confirming reception of the second signal.
16. The apparatus according to any one of paragraphs 1-15, wherein the at least one memory and the instructions, when executed by the at least one processor, further cause the apparatus at least to:
   transmit a query signal requesting connectivity support for the relay device during an active period of the relay device.
17. An apparatus comprising:
   at least one processor; and
   at least one memory storing instructions that, when executed by the at least one processor, cause the apparatus at least to:
      receive a first signal from a user equipment indicating that a condition has been satisfied;
      transmit operating state information of the user equipment to a network entity; and
      transmit one or more second signals to the user equipment relaying a reference signal or a data transmission from the network entity to the user equipment.
18. The apparatus according to paragraph 17, wherein the at least one memory and the instructions, when executed by the at least one processor, further cause the apparatus at least to:
   determine an operating state of the user equipment by decoding the operating state information and confirming that the user equipment is operational.
19. The apparatus according to paragraph 17 or paragraph 18, wherein the transmitting of the operating state information to the network entity comprises informing the network entity of an operating state of the user equipment.
20. The apparatus according to any one of paragraphs 17-19, wherein the at least one memory and the instructions, when executed by the at least one processor, further cause the apparatus at least to:
   relay an acknowledgement message from the user equipment to the network entity which confirms the user equipment received the reference signal or data transmission.
21. The apparatus according to any one of paragraphs 17-20, wherein a PC5 connection is established with the user equipment before a condition is satisfied that results in the first signal being transmitted from the user equipment and received by the apparatus.
22. The apparatus according to paragraph 21, wherein transmission or reception with the user equipment is suspended when the PC5 connection is established with the user equipment.
23. The apparatus according to any one of paragraphs 17-22, wherein the second signal comprises a device-to-device signal to wake-up the user equipment and inform the user equipment of scheduled data from the network entity.
24. The apparatus according to any one of paragraphs 17-23, wherein the at least one memory and the instructions, when executed by the at least one processor, further cause the apparatus at least to:
   receive, from the user equipment, a response comprising an acknowledgment message confirming reception of the second signal.
25. The apparatus according to any one of paragraphs 17-24, wherein the at least one memory and the instructions, when executed by the at least one processor, further cause the apparatus at least to:
   receive a query signal requesting connectivity support for the apparatus during an active period of the apparatus.
26. An apparatus comprising:
   at least one processor; and
   at least one memory storing instructions that, when executed by the at least one processor, cause the apparatus at least to:
      transmit configuration information of a relay device to a user equipment;
      receive operating state information of the user equipment from the relay device; and
      transmit a reference signal or data transmission to the relay device to be relayed to the user equipment by the relay device.
27. The apparatus according to paragraph 26, wherein the configuration information of the relay device comprises wake up cycles of the relay device, pairing information, or an extended timer.
28. The apparatus according to paragraph 26 or paragraph 27, wherein the operation state information comprises an indication of an operating state of the user equipment.
29. The apparatus according to any one of paragraphs 26-28, wherein the at least one memory and the instructions, when executed by the at least one processor, further cause the apparatus at least to:
   transmit a request to the relay device requesting that the relay device act as a relay between the apparatus and the user equipment.
30. The apparatus according to paragraph 29, wherein the request to the relay device comprises information to be relayed to the user equipment.
31. A method, comprising:
   transmitting, by an apparatus, a first signal to a relay device indicating that a condition has been satisfied; and
   determining, by the apparatus, whether a radio link failure with a network entity exists based on whether a second signal is received a specified number of times from the relay device.
32. The method according to paragraph 31, wherein the condition is set by radio resource control and the condition is satisfied by the apparatus receiving consecutive out of synchronization indications with the network entity.
33. The method according to paragraph 31 or paragraph 32, further comprising:
   determining the relay device is in an active period based on configuration information related to a wake-up signal,
   wherein the configuration information is received from the network entity, and
   wherein the first signal is transmitted to the relay device while the relay device is determined to be in the active period.
34. The method according to any one of paragraphs 31-33, further comprising:
   monitoring for the second signal from the relay device in response to the first signal.
35. The method according to paragraph 34, wherein the second signal is a reference signal or a data transmission from the relay device.
36. The method according to paragraph 34 or paragraph 35, wherein the second signal is monitored during a time period after the first signal is transmitted.
37. The method according to paragraph 36, wherein the radio link failure is determined based on the second signal not being received for the specified number of times within the time period.
38. The method according to paragraph 36, wherein there is no determination of the radio link failure when the second signal is received for the specified number of times within the time period.
39. The method according to any one of paragraphs 31-38, wherein a PC5 connection is established with the relay device before the condition is satisfied.
40. The method according to paragraph 39, wherein transmission or reception with the relay device is suspended when the PC5 connection is established with the relay device.
41. The method according to paragraph 40, wherein the suspension of the transmission to the relay device is terminated, when the second signal is received for the specified number of times within the time period.
42. The method according to any one of paragraphs 36-41, further comprising:
   starting one of a first timer or a second timer such that the time period ends with the expiration of the started one timer of the first timer or the second timer,
   wherein the first timer is a legacy timer and the second timer is an extended timer, and
   wherein the first timer is started if there is no wake-up time for the relay device before an expiration of the second timer and the second timer is started if there is wake-up time for the relay device before the expiration of the second timer.
43. The method according to paragraph 42, further comprising:
   stopping the second timer when the second signal is received for the specified number of times from the relay device before the expiration of the second timer.
44. The method according to any one of paragraphs 31-43, wherein the second signal comprises a device-to-device signal to wake-up the apparatus and inform the apparatus of scheduled data from the network entity.
45. The method according to any one of paragraphs 31-44, further comprising:
   transmitting a response comprising an acknowledgment message to the relay device confirming reception of the second signal.
46. The method according to any one of paragraphs 31-45, further comprising:
   transmitting a query signal requesting connectivity support for the relay device during an active period of the relay device.
47. A method, comprising:
   receiving, by an apparatus, a first signal from a user equipment indicating that a condition has been satisfied;
   transmitting, by the apparatus, operating state information of the user equipment to a network entity; and
   transmitting, by the apparatus, one or more second signals to the user equipment relaying a reference signal or a data transmission from the network entity to the user equipment.
48. The method according to paragraph 47, further comprising:
   determining an operating state of the user equipment by decoding the operating state information and confirming that the user equipment is operational.
49. The method according to paragraph 47 or paragraph 48, wherein the transmitting of the operating state information to the network entity comprises informing the network entity of an operating state of the user equipment.
50. The method according to any one of paragraphs 47-49, further comprising:
   relaying an acknowledgement message from the user equipment to the network entity which confirms the user equipment received the reference signal or data transmission.
51. The method according to any one of paragraphs 47-50, wherein a PC5 connection is established with the user equipment before a condition is satisfied that results in the first signal being transmitted from the user equipment and received by the apparatus.
52. The method according to paragraph 51, wherein transmission or reception with the user equipment is suspended when the PC5 connection is established with the user equipment.
53. The method according to any one of paragraphs 47-52, wherein the second signal comprises a device-to-device signal to wake-up the user equipment and inform the user equipment of scheduled data from the network entity.
54. The method according to any one of paragraphs 47-53, further comprising:
   receiving, from the user equipment, a response comprising an acknowledgment message confirming reception of the second signal.
55. The method according to any one of paragraphs 47-54, further comprising:
   receiving a query signal requesting connectivity support for the apparatus during an active period of the apparatus.
56. A method, comprising:
   transmitting, by an apparatus, configuration information of a relay device to a user equipment;
   receiving, by the apparatus, operating state information of the user equipment from the relay device; and
   transmitting, by the apparatus, a reference signal or data transmission to the relay device to be relayed to the user equipment by the relay device.
57. The method according to paragraph 56, wherein the configuration information of the relay device comprises wake up cycles of the relay device, pairing information, or an extended timer.
58. The method according to paragraph 56 or paragraph 57, wherein the operation state information comprises an indication of an operating state of the user equipment.
59. The method according to any one of paragraphs 56-58, further comprising:
   transmitting a request to the relay device requesting that the relay device act as a relay between the apparatus and the user equipment.
60. The method according to paragraph 59, wherein the request to the relay device comprises information to be relayed to the user equipment.
61. An apparatus, comprising:
   means for transmitting a first signal to a relay device indicating that a condition has been satisfied; and
   means for determining whether a radio link failure with a network entity exists based on whether a second signal is received a specified number of times from the relay device.
62. The apparatus according to paragraph 61, wherein the condition is set by radio resource control and the condition is satisfied by the apparatus receiving consecutive out of synchronization indications with the network entity.
63. The apparatus according to paragraph 61 or paragraph 62, further comprising:
   means for determining the relay device is in an active period based on configuration information related to a wake-up signal,
   wherein the configuration information is received from the network entity, and
   wherein the first signal is transmitted to the relay device while the relay device is determined to be in the active period.
64. The apparatus according to any one of paragraphs 61-63, further comprising:
   means for monitoring for the second signal from the relay device in response to the first signal.
65. The apparatus according to paragraph 64, wherein the second signal is a reference signal or a data transmission from the relay device.
66. The apparatus according to paragraph 64 or paragraph 65, wherein the second signal is monitored during a time period after the first signal is transmitted.
67. The apparatus according to paragraph 66, wherein the radio link failure is determined based on the second signal not being received for the specified number of times within the time period.
68. The apparatus according to paragraph 66, wherein there is no determination of the radio link failure when the second signal is received for the specified number of times within the time period.
69. The apparatus according to any one of paragraphs 61-68, wherein a PC5 connection is established with the relay device before the condition is satisfied.
70. The apparatus according to paragraph 69, wherein transmission or reception with the relay device is suspended when the PC5 connection is established with the relay device.
71. The apparatus according to paragraph 70, wherein the suspension of the transmission to the relay device is terminated, when the second signal is received for the specified number of times within the time period.
72. The apparatus according to any one of paragraphs 66-71, further comprising:
   means for starting one of a first timer or a second timer such that the time period ends with the expiration of the started one timer of the first timer or the second timer,
   wherein the first timer is a legacy timer and the second timer is an extended timer, and
   wherein the first timer is started if there is no wake-up time for the relay device before an expiration of the second timer and the second timer is started if there is wake-up time for the relay device before the expiration of the second timer.
73. The apparatus according to paragraph 72, wherein further comprising:
   means for stopping the second timer when the second signal is received for the specified number of times from the relay device before the expiration of the second timer.
74. The apparatus according to any one of paragraphs 61-73, wherein the second signal comprises a device-to-device signal to wake-up the apparatus and inform the apparatus of scheduled data from the network entity.
75. The apparatus according to any one of paragraphs 61-74, further comprising:
   means for transmitting a response comprising an acknowledgment message to the relay device confirming reception of the second signal.
76. The apparatus according to any one of paragraphs 61-75, further comprising:
   means for transmitting a query signal requesting connectivity support for the relay device during an active period of the relay device.
77. An apparatus comprising:
   means for receiving a first signal from a user equipment indicating that a condition has been satisfied;
   means for transmitting operating state information of the user equipment to a network entity; and
   means for transmitting one or more second signals to the user equipment relaying a reference signal or a data transmission from the network entity to the user equipment.
78. The apparatus according to paragraph 77, further comprising:
   means for determining an operating state of the user equipment by decoding the operating state information and confirming that the user equipment is operational.
79. The apparatus according to paragraph 77 or paragraph 78, wherein the transmitting of the operating state information to the network entity comprises informing the network entity of an operating state of the user equipment.
80. The apparatus according to any one of paragraphs 77-79, further comprising:
   means for relaying an acknowledgement message from the user equipment to the network entity which confirms the user equipment received the reference signal or data transmission.
81. The apparatus according to any one of paragraphs 77-80, wherein a PC5 connection is established with the user equipment before a condition is satisfied that results in the first signal being transmitted from the user equipment and received by the apparatus.
82. The apparatus according to paragraph 81, wherein transmission or reception with the user equipment is suspended when the PC5 connection is established with the user equipment.
83. The apparatus according to any one of paragraphs 77-82, wherein the second signal comprises a device-to-device signal to wake-up the user equipment and inform the user equipment of scheduled data from the network entity.
84. The apparatus according to any one of paragraphs 77-83, further comprising:
   means for receiving, from the user equipment, a response comprising an acknowledgment message confirming reception of the second signal.
85. The apparatus according to any one of paragraphs 77-84, further comprising:
   means for receiving a query signal requesting connectivity support for the apparatus during an active period of the apparatus.
86. An apparatus comprising:
   means for transmitting configuration information of a relay device to a user equipment;
   means for receiving operating state information of the user equipment from the relay device; and
   means for transmitting a reference signal or data transmission to the relay device to be relayed to the user equipment by the relay device.
87. The apparatus according to paragraph 86, wherein the configuration information of the relay device comprises wake up cycles of the relay device, pairing information, or an extended timer.
88. The apparatus according to paragraph 86 or paragraph 87, wherein the operation state information comprises an indication of an operating state of the user equipment.
89. The apparatus according to any one of paragraphs 86-88, further comprising:
   means for transmitting a request to the relay device requesting that the relay device act as a relay between the apparatus and the user equipment.
90. The apparatus according to paragraph 89, wherein the request to the relay device comprises information to be relayed to the user equipment.
91. A non-transitory computer readable medium comprising program instructions that, when executed by an apparatus, cause the apparatus at least to:
   transmit a first signal to a relay device indicating that a condition has been satisfied; and
   determine whether a radio link failure with a network entity exists based on whether a second signal is received a specified number of times from the relay device.
92. The non-transitory computer readable medium according to paragraph 91, wherein the condition is set by radio resource control and the condition is satisfied by the apparatus receiving consecutive out of synchronization indications with the network entity.
93. The non-transitory computer readable medium according to paragraph 91 or paragraph 92, wherein the apparatus is further caused to:
   determine the relay device is in an active period based on configuration information related to a wake-up signal,
   wherein the configuration information is received from the network entity, and
   wherein the first signal is transmitted to the relay device while the relay device is determined to be in the active period.
94. The non-transitory computer readable medium according to any one of paragraphs 91-93, wherein the apparatus is further caused to:
   monitor for the second signal from the relay device in response to the first signal.
95. The non-transitory computer readable medium according to paragraph 94, wherein the second signal is a reference signal or a data transmission from the relay device.
96. The non-transitory computer readable medium according to paragraph 94 or paragraph 95, wherein the second signal is monitored during a time period after the first signal is transmitted.
97. The non-transitory computer readable medium according to paragraph 96, wherein the radio link failure is determined based on the second signal not being received for the specified number of times within the time period.
98. The non-transitory computer readable medium according to paragraph 96, wherein there is no determination of the radio link failure when the second signal is received for the specified number of times within the time period.
99. The non-transitory computer readable medium according to any one of paragraphs 91-98, wherein a PC5 connection is established with the relay device before the condition is satisfied.
100. The non-transitory computer readable medium according to paragraph 99, wherein transmission or reception with the relay device is suspended when the PC5 connection is established with the relay device.
101. The non-transitory computer readable medium according to paragraph 100, wherein the suspension of the transmission to the relay device is terminated, when the second signal is received for the specified number of times within the time period.
102. The non-transitory computer readable medium according to any one of paragraphs 96-101, wherein the apparatus is further caused to:
   start one of a first timer or a second timer such that the time period ends with the expiration of the started one timer of the first timer or the second timer,
   wherein the first timer is a legacy timer and the second timer is an extended timer, and
   wherein the first timer is started if there is no wake-up time for the relay device before an expiration of the second timer and the second timer is started if there is wake-up time for the relay device before the expiration of the second timer.
103. The non-transitory computer readable medium according to paragraph 102, wherein the apparatus is further caused to:
   stop the second timer when the second signal is received for the specified number of times from the relay device before the expiration of the second timer.
104. The non-transitory computer readable medium according to any one of paragraphs 91-103, wherein the second signal comprises a device-to-device signal to wake-up the apparatus and inform the apparatus of scheduled data from the network entity.
105. The non-transitory computer readable medium according to any one of paragraphs 91-104, wherein the apparatus is further caused to:
   transmit a response comprising an acknowledgment message to the relay device confirming reception of the second signal.
106. The non-transitory computer readable medium according to any one of paragraphs 91-105, wherein the apparatus is further caused to:
   transmit a query signal requesting connectivity support for the relay device during an active period of the relay device.
107. A non-transitory computer readable medium comprising program instructions that, when executed by an apparatus, cause the apparatus at least to:
   receive a first signal from a user equipment indicating that a condition has been satisfied;
   transmit operating state information of the user equipment to a network entity; and
   transmit one or more second signals to the user equipment relaying a reference signal or a data transmission from the network entity to the user equipment.
108. The non-transitory computer readable medium according to paragraph 107, wherein the apparatus is further caused to:
   determine an operating state of the user equipment by decoding the operating state information and confirming that the user equipment is operational.
109. The non-transitory computer readable medium according to paragraph 107 or paragraph 108, wherein the transmitting of the operating state information to the network entity comprises informing the network entity of an operating state of the user equipment.
110. The non-transitory computer readable medium according to any one of paragraphs 107-109, wherein the apparatus is further caused to:
   relay an acknowledgement message from the user equipment to the network entity which confirms the user equipment received the reference signal or data transmission.
111. The non-transitory computer readable medium according to any one of paragraphs 107-100, wherein a PC5 connection is established with the user equipment before a condition is satisfied that results in the first signal being transmitted from the user equipment and received by the apparatus.
112. The non-transitory computer readable medium according to paragraph 111, wherein transmission or reception with the user equipment is suspended when the PC5 connection is established with the user equipment.
113. The non-transitory computer readable medium according to any one of paragraphs 107-112, wherein the second signal comprises a device-to-device signal to wake-up the user equipment and inform the user equipment of scheduled data from the network entity.
114. The non-transitory computer readable medium according to any one of paragraphs 107-113, wherein the apparatus is further caused to:
   receive, from the user equipment, a response comprising an acknowledgment message confirming reception of the second signal.
115. The non-transitory computer readable medium according to any one of paragraphs 107-114, wherein the apparatus is further caused to:
   receive a query signal requesting connectivity support for the apparatus during an active period of the apparatus.
116. A non-transitory computer readable medium comprising program instructions that, when executed by an apparatus, cause the apparatus at least to:
   transmit configuration information of a relay device to a user equipment;
   receive operating state information of the user equipment from the relay device; and
   transmit a reference signal or data transmission to the relay device to be relayed to the user equipment by the relay device.
117. The non-transitory computer readable medium according to paragraph 116, wherein the configuration information of the relay device comprises wake up cycles of the relay device, pairing information, or an extended timer.
118. The non-transitory computer readable medium according to paragraph 116 or paragraph 117, wherein the operation state information comprises an indication of an operating state of the user equipment.
119. The non-transitory computer readable medium according to any one of paragraphs 116-118, wherein the apparatus is further caused to:
   transmit a request to the relay device requesting that the relay device act as a relay between the apparatus and the user equipment.
120. The non-transitory computer readable medium according to paragraph 119, wherein the request to the relay device comprises information to be relayed to the user equipment.
121. A computer program comprising instructions stored thereon for performing at least the method of paragraph 31.
122. A computer program comprising instructions stored thereon for performing at least the method of paragraph 47.
123. A computer program comprising instructions stored thereon for performing at least the method of paragraph 56.
124. An apparatus comprising one or more circuitry configured to perform the method of paragraph 31.
125. An apparatus comprising one or more circuitry configured to perform the method of paragraph 47.
126. An apparatus comprising one or more circuitry configured to perform the method of paragraph 56.

## Claims

1. An apparatus comprising:
at least one processor; and
at least one memory storing instructions that, when executed by the at least one processor, cause the apparatus at least to:
transmit a first signal to a relay device indicating that a condition has been satisfied; and
determine whether a radio link failure with a network entity exists based on whether a second signal is received a specified number of times from the relay device.

2. The apparatus according to claim 1, wherein the condition is set by radio resource control and the condition is satisfied by the apparatus receiving consecutive out of synchronization indications with the network entity.

3. The apparatus according to claim 1 or claim 2, wherein the at least one memory and the instructions, when executed by the at least one processor, further cause the apparatus at least to at least one of the following:
determine the relay device is in an active period based on configuration information related to a wake-up signal,
wherein the configuration information is received from the network entity, and
wherein the first signal is transmitted to the relay device while the relay device is determined to be in the active period; or
monitor for the second signal from the relay device in response to the first signal.

4. The apparatus according to claim 3, wherein at least one of the following:
the second signal is a reference signal or a data transmission from the relay device; or
the second signal is monitored during a time period after the first signal is transmitted.

5. The apparatus according to claim 4, wherein at least one of the following:
the radio link failure is determined based on the second signal not being received for the specified number of times within the time period; or
there is no determination of the radio link failure when the second signal is received for the specified number of times within the time period.

6. The apparatus according to any one of claims 1-5, wherein a PC5 connection is established with the relay device before the condition is satisfied, and preferably wherein transmission or reception with the relay device is suspended when the PC5 connection is established with the relay device, and preferably wherein the suspension of the transmission to the relay device is terminated, when the second signal is received for the specified number of times within the time period.

7. The apparatus according to any one of claims 4-6, wherein the at least one memory and the instructions, when executed by the at least one processor, further cause the apparatus at least to:
start one of a first timer or a second timer such that the time period ends with the expiration of the started one timer of the first timer or the second timer,
wherein the first timer is a legacy timer and the second timer is an extended timer, and
wherein the first timer is started if there is no wake-up time for the relay device before an expiration of the second timer and the second timer is started if there is wake-up time for the relay device before the expiration of the second timer, and preferably
stop the second timer when the second signal is received for the specified number of times from the relay device before the expiration of the second timer.

8. The apparatus according to any one of claims 1-7, wherein the second signal comprises a device-to-device signal to wake-up the apparatus and inform the apparatus of scheduled data from the network entity.

9. The apparatus according to any one of claims 1-8, wherein the at least one memory and the instructions, when executed by the at least one processor, further cause the apparatus at least to at least one of the following:
transmit a response comprising an acknowledgment message to the relay device confirming reception of the second signal; or
transmit a query signal requesting connectivity support for the relay device during an active period of the relay device.

10. An apparatus comprising:
at least one processor; and
at least one memory storing instructions that, when executed by the at least one processor, cause the apparatus at least to:
receive a first signal from a user equipment indicating that a condition has been satisfied;
transmit operating state information of the user equipment to a network entity; and
transmit one or more second signals to the user equipment relaying a reference signal or a data transmission from the network entity to the user equipment.

11. An apparatus comprising:
at least one processor; and
at least one memory storing instructions that, when executed by the at least one processor, cause the apparatus at least to:
transmit configuration information of a relay device to a user equipment;
receive operating state information of the user equipment from the relay device; and
transmit a reference signal or data transmission to the relay device to be relayed to the user equipment by the relay device.

12. A method, comprising:
transmitting, by an apparatus, a first signal to a relay device indicating that a condition has been satisfied; and
determining, by the apparatus, whether a radio link failure with a network entity exists based on whether a second signal is received a specified number of times from the relay device.

13. A method, comprising:
receiving, by an apparatus, a first signal from a user equipment indicating that a condition has been satisfied;
transmitting, by the apparatus, operating state information of the user equipment to a network entity; and
transmitting, by the apparatus, one or more second signals to the user equipment relaying a reference signal or a data transmission from the network entity to the user equipment.

14. A method, comprising:
transmitting, by an apparatus, configuration information of a relay device to a user equipment;
receiving, by the apparatus, operating state information of the user equipment from the relay device; and
transmitting, by the apparatus, a reference signal or data transmission to the relay device to be relayed to the user equipment by the relay device.

15. A computer program comprising instructions stored thereon which, when executed by a computer, perform at least the method of any one of claims 12-14.
